(19)

Europäisches Patentamt

European Patent Office

Office européen des brevets

(11)  **EP 4 579 578 A1**

(12)  # DEMANDE DE BREVET EUROPEEN

(43) Date de publication:
**02.07.2025  Bulletin 2025/27**

(21) Numéro de dépôt: **24223062.1**

(22) Date de dépôt: **23.12.2024**

(51) Classification Internationale des Brevets (IPC):
*G06T 5/70* (2024.01)

(52) Classification Coopérative des Brevets (CPC):
**G06T 5/70**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité:  **28.12.2023  FR 2315434**

(71) Demandeur: **Commissariat à l'Energie Atomique
et aux Energies
Alternatives
75015 Paris (FR)**

(72) Inventeurs:
• **OUERFELLI, Mohamed-Oumar
91191 GIF-SUR-YVETTE CEDEX (FR)**
• **TAMAAZOUSTI, Mohamed
91191 GIF-SUR-YVETTE CEDEX (FR)**
• **RADPAY, Parham
91191 GIF-SUR-YVETTE CEDEX (FR)**
• **RIVASSEAU, Vincent
91140 VILLEBON-SUR-YVETTE (FR)**

(74) Mandataire: **Cabinet Beaumont
4, Place Robert Schuman
B.P. 1529
38025 Grenoble Cedex 1 (FR)**

(54)  **DÉTECTION DE SIGNAL DANS DES DONNÉES TENSORIELLES**

(57)      La présente description concerne un procédé de détection d'un signal utile, le procédé comprenant :
- l'acquisition d'un signal brut, par un capteur ;
- la fourniture du signal brut, à un dispositif de traitement, le signal étant représenté par un tenseur d'ordre d supérieur ou égal à 3 ;
- le calcul d'une valeur d'invariance associée au tenseur, la valeur d'invariance étant calculée sur la base d'au moins un invariant de trace pour les tenseurs d'ordre d ;
- la comparaison de la valeur d'invariance associée au tenseur avec une première valeur de référence ;
- sur la base de la comparaison, la mise à disposition, par le dispositif de traitement, d'une estimation du rapport signal sur bruit du signal brut ; et
- si le rapport signal sur bruit estimé est différent de 0, la fourniture du tenseur à un circuit configuré pour traiter le signal brut.

Fig 6

**Description**

Domaine technique

La présente description concerne de façon générale la détection de signal lors de l'acquisition de données tensorielles, et en particulier lors de l'acquisition de représentations d'images.

Technique antérieure

Des capteurs, tels que par exemple des multi-capteurs, configurés pour acquérir des données telles que des images à plusieurs canaux, des vidéos, des images hyper-spectrales, etc. sont soumis à des bruits, d'origine interne et/ou externe. Les données acquises sont alors corrompues par du bruit dont la quantité est définie par un rapport signal sur bruit.

Des méthodes de détection de signal existent lorsque les données sont représentées sous forme de matrices, ce qui est par exemple le cas d'images en niveau de gris. Cependant, l'application de ces méthodes pour des données sous forme de tenseurs d'ordre supérieur ou égal à 3 nécessitent la réduction des données afin de les convertir en matrices ou vecteurs. Cette réduction de donnée entraîne par conséquent une perte de performance dans la détection de signal.

Il est souhaitable d'améliorer les méthodes de détection de signal pour des données représentées sous forme de tenseur d'ordre supérieur ou égal à 3.

Résumé de l'invention

Un mode de réalisation prévoit un procédé de détection d'un signal utile, le procédé comprenant :

- l'acquisition d'un signal brut, par un capteur ;
- la fourniture du signal brut, à un dispositif de traitement, le signal brut étant représenté par un tenseur d'ordre d supérieur ou égal à 3 ;
- le calcul, par le dispositif de traitement, d'une valeur d'invariance associée au tenseur, la valeur d'invariance étant calculée sur la base d'au moins un invariant de trace sous le groupe orthogonal de degré d pour les tenseurs d'ordre d ;
- la comparaison, par le dispositif de traitement, de la valeur d'invariance associée au tenseur avec une première valeur de référence ;
- sur la base de la comparaison, la mise à disposition, par le dispositif de traitement, d'une estimation du rapport signal sur bruit du signal brut ; et
- si le rapport signal sur bruit estimé est différent de 0, la fourniture du tenseur à un circuit configuré pour traiter le signal brut.

Selon un mode de réalisation, le capteur est configuré pour acquérir des représentations d'images et le circuit configuré pour traiter le signal brut est un circuit de traitement d'image.

Selon un mode de réalisation, la valeur d'invariance associée au tenseur est une combinaison linéaire d'une pluralité d'invariants de trace $I_j$ pour le groupe orthogonal pour les tenseurs d'ordre d, la combinaison étant de la forme $\Sigma_j \alpha_j I_j$, où les valeurs $\alpha_j$ sont des coefficients de pondération.

Selon un mode de réalisation, la combinaison linéaire comprend des invariants de trace mélonique et/ou de type « tadpole » et/ou tétraédraux et/ou de type « pillow ».

Selon un mode de réalisation, le coefficient de pondération d'un invariant de trace de type « pillow » est égal à l'inverse de la variance de l'invariant pour un tenseur de bruit pur.

Selon un mode de réalisation, le coefficient de pondération d'un invariant de trace mélonique et/ou de type « tadpole » et/ou tétraédral est égal au poids de symétrisation de l'invariant.

Selon un mode de réalisation, la première valeur de référence est fonction de l'espérance de la valeur d'invariance pour un tenseur de bruit pur.

Selon un mode de réalisation, la première valeur de référence est égale à $E[I] + 2\sqrt{\mathrm{Var}(I)}$, où E[I] et Var(I) sont respectivement l'espérance et la variance de la valeur d'invariance pour un tenseur de bruit pur.

Selon un mode de réalisation, si la valeur d'invariance est supérieure à la première valeur de référence, le dispositif de traitement est configuré pour déterminer que le signal brut acquis par le capteur comprend un signal utile.

Selon un mode de réalisation, le procédé ci-dessus comprend en outre, lorsqu'il est déterminé que la valeur d'invariance est supérieure à la première valeur de référence :

- la comparaison de la valeur d'invariance avec une deuxième valeur de référence fonction de l'espérance de la valeur d'invariance pour un tenseur associé à un rapport signal sur bruit de valeur β.

Un mode de réalisation prévoit un dispositif comprenant :

- un capteur configuré pour acquérir un signal brut ;
- un dispositif de traitement configuré pour exécuter des instructions stockées dans une mémoire non volatile du dispositif, l'exécution des instructions permettant de détecter si le signal brut comprend un signal utile, en faisant :
- la mise en forme du signal brut sous la forme d'un tenseur d'ordre supérieur à 3 ;

- le calcul d'une valeur d'invariance du tenseur ;
- la comparaison de la valeur d'invariance avec une valeur de référence ;
- sur la base de la comparaison, l'estimation du rapport signal sur bruit présent dans le signal brut ; et
- s'il est déterminé que le rapport signal sur bruit est non nul, la fourniture du tenseur à un circuit configuré pour effectuer des opérations de traitement du signal brut.

Selon un mode de réalisation, le capteur est configuré pour acquérir des représentations d'image et le circuit configuré pour effectuer des opérations de traitement du signal brut est un circuit de traitement d'image.

Un mode de réalisation prévoit un procédé de détermination d'une combinaison d'invariants de trace, la combinaison étant de la forme $\Sigma_j \alpha_j I_j$, où les $I_j$ sont des invariants de trace et les valeurs $\alpha_j$ sont des coefficients de pondération, adapté à un dispositif, le procédé comprenant :

- la fourniture de l'indication des ressources en mémoire du dispositif à un dispositif externe ;
- la fourniture de l'indication d'un temps de traitement, au dispositif externe ;
- la fourniture d'une indication de dimensions de l'ordre de tenseurs au dispositif externe ;
- la recherche d'un ensemble d'invariants de trace, en association d'un ensemble de poids, formant la combinaison, parmi une pluralité d'invariants de trace, chaque ensemble d'invariants de trace étant associé à un coût et chaque valeur de coût étant stockée dans une mémoire du dispositif externe en association d'un identifiant de l'ensemble associé, la recherche de l'ensemble d'invariants s'effectuant sur la base des ressources mémoire et/ou du temps de calcul et/ou de l'indication des dimensions fournies ;
- la fourniture de l'ensemble d'invariants de trace et des poids au dispositif afin qu'une valeur d'invariance soit calculée, par le dispositif, sur la base de la combinaison d'invariants déterminée.

Selon un mode de réalisation, les poids, associés à chaque invariant de trace dans chaque combinaison, sont déterminés par la réalisation d'une descente de gradient sur une fonction objectif déterminant une distance entre la distribution de la valeur d'invariance associé à la combinaison pour un tenseur de bruit pur et pour un tenseur ayant un rapport signal sur bruit non nul.

Selon un mode de réalisation, chaque invariant de trace est un invariant de trace mélonique et/ou de type « tadpole » et/ou tétraédral et/ou de type « pillow ».

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 est un schéma par blocs représentant un dispositif de traitement ;

la figure 2 est un exemple d'un tenseur et de graphes représentant des invariants de trace ;

la figure 3A et la figure 3B illustrent des graphes représentant des ensembles d'invariants de trace ;

la figure 4A et la figure 4B illustrent des calculs analytiques de moments d'invariants de trace associés à la distribution des tenseurs de bruit pur ;

la figure 5 est un graphique illustrant des distributions d'invariants de trace ;

la figure 6 est un organigramme illustrant des étapes d'un procédé de détection de signal, selon un mode de réalisation de la présente description ;

la figure 7 est un organigramme illustrant des étapes d'un procédé de détection de signal, selon un autre mode de réalisation de la présente description ;

la figure 8A et la figure 8B illustrent le comportement du numérateur d'une fonction objectif pour plusieurs invariants et plusieurs graphes ;

la figure 9A, la figure 9B, la figure 10A et la figure 10B sont des graphiques illustrant la distribution de poids fournis par un processus de symétrisation ;

la figure 11A et la figure 11B sont des graphiques illustrant des descentes de gradient associées à la fonction objectif ;

la figure 12A et la figure 12B sont des graphiques illustrant les valeurs de la fonction objectif pour différents graphes et en fonction de la valeur du rapport signal sur bruit ;

la figure 13A, la figure 13B, la figure 13C et la figure 13D sont des graphiques illustrant des distributions d'invariants de trace ;

la figure 14A, la figure 14B et la figure 14C sont des graphiques illustrant des taux de succès dans la détection de signal, selon un mode de réalisation de la présente description ;

la figure 15 est un graphique illustrant des poids obtenus par descente de gradients ;

la figure 16 est un organigramme illustrant un procédé de sélection d'un ensemble d'invariants de trace, selon un mode de réalisation de la présente description ; et

la figure 17 est un graphique illustrant des taux de succès dans la détection de signal, selon un mode de réalisation de la présente description et selon une méthode matricielle.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

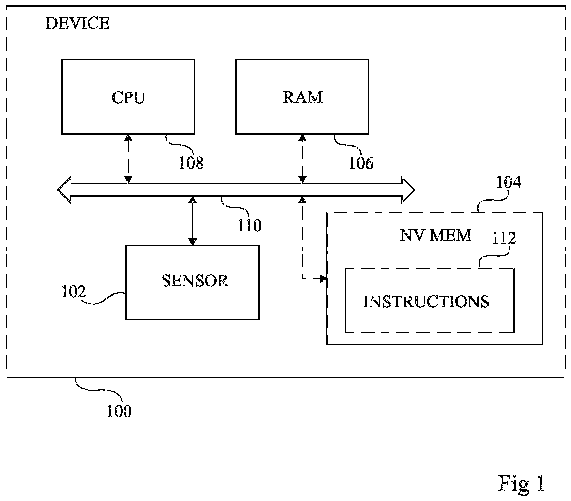

La figure 1 est un schéma par blocs représentant un dispositif de traitement 100 (DEVICE). Le dispositif 100 comprend un ou plusieurs capteurs 102 (SENSOR). A titre d'exemple, le ou les capteurs 102 sont des multi-capteurs configurés pour acquérir des représentations d'images. En particulier, les représentations d'images acquises par le, ou les, capteurs 102 sont des données représentées sous forme de tenseurs d'ordre supérieur ou égal à 3. Les données sont par exemple des vidéos, des images comprenant au moins deux canaux, tels que par exemples des canaux couleurs, infrarouge etc. Un tenseur d'ordre 3 représentant une vidéo peut alors être vu comme une suite de matrices, chaque matrice correspondant à un instant de la vidéo. Chaque élément de chaque matrice est alors une valeur de niveau de gris associé à un pixel d'une image de la vidéo à un instant donné. Des images, ou vidéo, en couleur, sont représentées par des tenseurs d'ordre plus élevés. Par exemple, une image couleur RGB est représentée par un tenseur d'ordre 3.

Les représentations d'images acquises par des capteurs tels que le capteur 102 sont généralement corrompues par des bruits. A titre d'exemple, ces bruits proviennent de l'extérieur du dispositifs et/ou sont des bruits internes au capteur 102. De manière générale, la quantité de bruits dans une image s'évalue par un rapport signal sur bruit. Une donnée ayant un rapport signal sur bruit égal à 0 est une donnée de bruit pur, c'est-à-dire, une donnée comprenant uniquement du bruit. En particulier, dans le cas où une image acquise par le capteur 102 est une donnée bruit pur, cela traduit qu'aucun signal n'a été mesuré lors de son acquisition. Plus le rapport signal sur bruit d'une donnée est élevé, moins la donnée est corrompue par des bruits.

A titre d'exemple, les bruits présents dans les données acquises par le capteur 102 se modélisent par un bruit gaussien. Ainsi, dans la suite, lorsqu'on fait référence à du bruit présent dans un tenseur, ce bruit a la forme d'un tenseur de même ordre et dimension et est composé d'éléments suivant chacun une loi normale centrée et réduite, chaque élément étant indépendant des autres. Cette modélisation est réaliste car les sources de bruits sont tellement diverses et nombreuses que le théorème central limite s'applique.

Le dispositif 100 comprend, en outre, une mémoire non volatile 104 (NV MEM), une mémoire volatile 106 (RAM) et un processeur 108 (CPU) reliés au capteur 102 par l'intermédiaire d'un bus 110. A titre d'exemple, la mémoire 106 est une mémoire à accès aléatoire (RAM - Random Memory Access ») et le processeur 108 est une unité centrale de calcul (CPU - « Central Processing Unit »). Dans un autre exemple, la mémoire 106 est une mémoire vidéo (VRAM - « Vidéo Random Access Memory ») et le processeur 108 est une unité de traitement graphique (GPU - « Graphics Processing Unit ») . Lorsque le capteur 102 acquiert une donnée, représentée par un tenseur, le processeur 108 est configurés pour exécuter des instructions 112 (INSTRUCTIONS). A titre d'exemple, les instructions 112 sont stockées dans la mémoire non volatile 104 et sont chargées dans la mémoire volatile 106 afin d'être exécutées. Selon un mode de réalisation, les instructions 112 sont des instructions permettant la mise en oeuvre d'un procédé de détection de signal dans des représentations d'image, sous forme de tenseurs d'ordre supérieur ou égal à 3, acquises par le capteur 102. En particulier, les données manipulées lors de la mise en oeuvre du procédé de détection de signal ne sont pas converties sous forme de matrices, ou plus largement, sous forme de tenseurs d'ordre inférieur à 3.

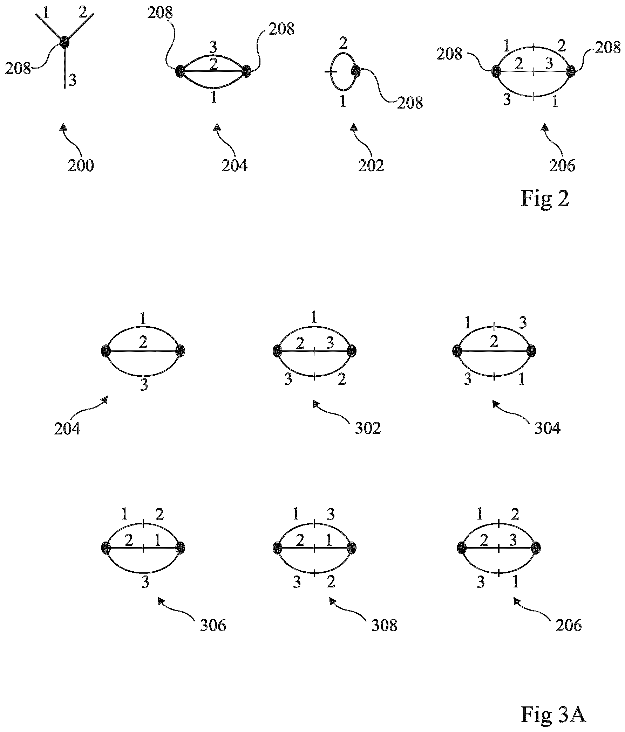

La figure 2 est un exemple de graphes représentant des invariants de trace. Pour un tenseur T, on utilisera la notation d'Einstein pour les sommations. Autrement dit, pour un tenseur T d'ordre 3, la quantité $T_{i,j,k}T_{i,j,k}$ est la somme de tous les éléments du tenseur, c'est-à-dire que $T_{i,j,k}T_{i,j,k} = \Sigma_{i,j,k}T[i][j][k]$. De manière générale, une valeur invariante pour un tenseur $T \in \bigotimes_{i=1}^{d} R^{n_i}$ est un scalaire invariant sous les transformations telles que

$$T_{i_1 \ldots i_d} \longrightarrow T'_{i_1 \ldots i_k} = \sum_{j_1 \ldots j_d} O^{(1)}_{i_1 j_1} \ldots O^{(d)}_{i_d j_d} T_{j_1 \ldots j_d}$$, où les éléments $O^{(1)}_{i_1 j_1}, \ldots, O^{(d)}_{i_d j_d}$ sont des éléments des groupes orthogonaux $O(n_1) \times \ldots \times O(n_d)$. Dans le cas d'une matrice M, des valeurs telles que la trace du produit $MM'$, où $M'$ *est* la transposée de la matrice M, son déterminant, ou encore les coefficients de son polynôme caractéristique sont des valeurs invariantes.

Les invariants de trace sont généralement formés par contractions d'une ou plusieurs copies d'un tenseur. Le nombre de copies détermine alors le degré de l'invariant. Ainsi, la trace d'une matrice est un invariant d'ordre 1. En particulier, les invariants de trace admettent des représentations sous forme de graphes.

Des graphes 200 et 202 illustrent des exemples d'invariants de trace d'ordre 1. Des graphes 204 et 206 illustrent des exemples d'invariants de trace d'ordre 2.

Les copies de tenseurs sont représentées par des sommets 208 pour les tenseurs d'ordre 3 et des sommets 210 pour une matrice. Chaque arête, numérotée 1,2 ou 3 dans la figure 2, correspond à un indice du tenseur. Ainsi, le nombre d'arêtes correspond à l'ordre du tenseur.

Le graphe 200 représente une copie d'un tenseur d'ordre 3. En particulier, la copie représentée par le graphe 200 est une copie $T_{i,j,k}$ d'un tenseur T. Les arêtes numérotées 1, 2 et 3 représentent respectivement les indices *i, j* et *k.*

Le graphique 202 représente la trace d'une matrice. Les deux arêtes 1 et 2 se rejoignent ce qui signifie que la somme s'effectue sur les éléments diagonaux de la matrice. Ainsi, la trace d'une matrice est égale à $T_{i,i}.$

Les graphes 204 et 206 représentent des invariants de trace d'ordre 2 pour des tenseurs d'ordre 3. En particulier, le graphe 204 représente la contraction de deux copies 208 et l'invariant représenté est $T_{i,j,k}T_{i,j,k}.$ Le graphe 206 illustre une contraction de deux copies 208, la contraction s'effectuant sur des indices ayant des positions différentes. La jonction des deux arêtes en haut signifie que la somme s'effectue sur la première copie ayant son premier indice égal au deuxième indice de la deuxième copie. L'invariant de trace représenté est alors $T_{i,j,k}T_{k,i,j}.$

Dans le cadre de la représentation par graphe, un procédé de symétrisation de tenseur consiste à sommer toutes les permutations possibles des arêtes, la somme étant pondérée par l'inverse du nombre de permutations possibles. Ainsi, dans l'exemple du graphe 200, et lorsque le tenseur T est un tenseur d'ordre 3 cubique, chaque élément $\overline{T}[i][j][k]$ du tenseur symétrisé $\overline{T}$ est égal à $(T[i][j][k] + T[i][k][j] + T[j][i][k] + T[j][k][i] + T[k][i][j] + T[k][j][i])/6.$

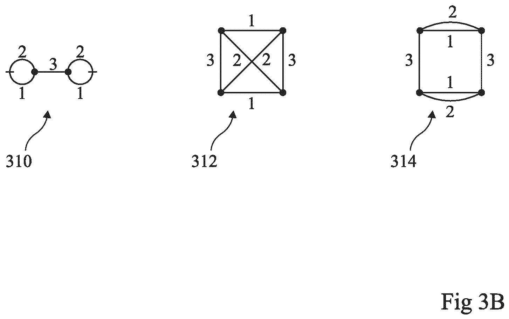

Les figures 3A et 3B illustrent des graphes représentant des ensembles d'invariants de trace.

En particulier, la figure 3A, illustre des graphes dits « méloniques » (en anglais « melonic graphs ») pour des tenseurs d'ordre 3. Les graphes de cette catégorie sont formés d'auto-contraction de deux copies de tenseurs. Dans le cas de tenseurs d'ordre 3, cette catégorie comprend 36 graphes et comprend en particulier les graphes 204, noté $I_1$, et 206, noté $I_6$. En fixant l'ordre des indices de la première copie à $\{i, j, k\}$, on réduit le nombre de graphes à 6. En effet, les invariants de trace $T_{i,j,k}T_{i,j,k}$ et $T_{i,k,i}T_{k,i,j}$ sont identiques, on peut donc se restreindre à considérer $T_{i,j,k}$ comme première copie. En définissant une catégorie de graphes comme étant un ensemble de graphes, dont chaque graphe correspond aux autres graphes de l'ensemble à une permutation d'indices prêt, les quatre autres graphes de la catégorie mélonique sont des graphes 302, 304, 306 et 308 représentants respectivement les invariants de trace $I_2 = T_{i,j,k}T_{i,k,j}$, $I_3 = T_{i,j,k}T_{k,j,i}$, $I_4 = T_{i,j,k}T_{j,i,k}$ et $I_5 = T_{i,j,k}T_{j,k,i}.$ Cependant, les invariants représentés $I_5$ et $I_6$ sont identiques. Cela signifie qu'il n'y a que cinq graphes méloniques possibles pouvant être formés, et la contraction de tenseurs symétrisés donne des poids différents à ces invariants. Afin d'éviter de symétriser les tenseurs, tel que décrit en relation avec la figure 2, ce qui est coûteux en temps et en ressources, on affecte des poids de symétrisations à chaque invariants. En particulier, les poids des 5 invariants de trace possibles sont {1,1,1,1,2}.

La figure 3B, illustre des graphes 310, 312, 314 appartenant chacun à d'autres catégories de graphes.

Le graphe 310 est un exemple de graphe dit « tadpole ». L'invariant représenté par le graphe 310 est égal à $T_{j,j,k}T_{i,i,k}.$ Chaque graphe de la catégorie « tadpole » a ses sommets reliés par une arête centrale correspondant à un unique indice, et les deux autres arêtes de chaque copie se rejoignent. La catégorie « tadpole » comprend 6 graphes différents et les poids de symétrisation sont {1,1,1,2,2,2}. Les 6 invariants représentés par les graphes « tadpoles » sont $I'_1 = T_{j,j,k}T_{i,i,k}$, $I'_2 = T_{i,j,i}T_{k,j,k}$, $I'_3 = T_{i,j,j}T_{i,k,k}$, $I'_4 = T_{i,l,i}T_{k,k,l}$, $I'_5 = T_{i,j,j}T_{k,k,i}$ et $I'_6 = T_{i,j,i}T_{k,i,j}.$

Le graphe 312 est un exemple de graphe tétraédral. Les graphes tétraédraux représentent des invariants de trace faisant intervenir 4 copies d'un tenseur. Les invariants de trace représentés par ces graphes sont par conséquent des invariants de trace d'ordre 4. L'invariant représenté par le graphe 312 est égal à $T_{i,j,k}T_{i,j',k'}T_{i',j,k'}T_{i',j',k}$. Les graphes tétraédraux représentent 60 invariants de trace différents, parmi les 216 invariants sans prendre en compte les symétries, avec des poids variants entre les valeurs {1,2,4}.

Le graphe 314 est un exemple de graphe dit « pillow » formé de double contraction entre deux paires de copies du tenseur. Les invariants de trace représentés par les graphes « pillow » sont des invariant de trace d'ordre 4. En particulier, le graphe 314 représente un invariant égal à $T_{i,j,k}T_{i,j',k'}T_{i,j,k'}T_{i',j',k}$. Les graphes « pillow » représentent 99 invariants de trace différents, parmi 348, avec des poids variants entre les valeurs {1,2,4}.

Les figures 3A et 3B illustrent des exemples de graphes pour des tenseurs d'ordre 3, mais il existe bien sûr des représentations sous la forme de graphes pour des tenseurs d'ordres supérieurs à 3. Les nombres d'invariants de trace par catégorie sont alors plus élevés.

Selon un mode de réalisation, les instructions 112 permettent le calcul d'une valeur d'invariance en calculant un invariant de trace, ou d'une combinaison d'invariants de trace, représenté par une seule, ou plusieurs, catégories de graphes. Les instructions 212 sont en outre configurées pour que la valeur d'invariance soit comparée à la distribution des valeurs d'invariance pour des tenseurs de bruit pur. En particulier, la valeur d'invariance est comparée à une valeur basée sur l'espérance de la valeur d'invariance pour un tenseur composé uniquement de bruit pur. Dans un autre exemple, la valeur d'invariance est comparée à une valeur basée sur l'espérance et la variance de la valeur d'invariance pour un tenseur composé uniquement de bruit pur. Un tel tenseur s'écrit alors $T = Z$ où $Z$ est, par exemple, un tenseur gaussien dont chaque élément est indépendant des autres et suit un loi normale centrée et réduite. Dans un autre exemple, le tenseur Z est un tenseur modélisant un bruit dont les éléments sont par exemple corrélés et/ou suivent une distribution différente d'une distribution gaussienne.

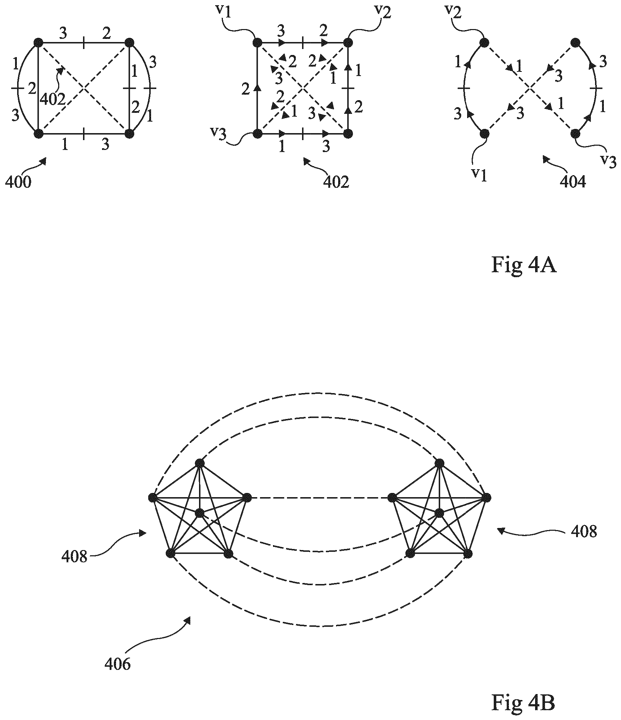

Les figures 4A et 4B illustrent des calculs analytiques de moments d'invariants de trace associés à la distribution des tenseurs de bruit pur.

En particulier, la figure 4A illustre un exemple d'un calcul d'espérance pour un invariant de trace de type « pillow » pour un tenseur de bruit pur d'ordre 3. Les calculs d'espérance, et plus généralement de moments de tout ordre, se basent sur une représentation du graphe associé à l'invariant de trace en un graphe couvrant. Un graphe couvrant 400 est un exemple de graphe couvrant pour les graphes dits « pillow ». Un graphe couvrant pour un invariant d'ordre k, d'un tenseur d'ordre d est construit en ajoutant des demi arêtes 402, appelée propagateurs et représentées en pointillée, à chaque sommet puis en connectant chaque propagateur à un autre. Pour un graphe donné, il existe donc plusieurs graphes couvrants.

Le calcul de l'espérance d'un invariant représenté par un graphe se base sur la reconnaissance de cycles dans le graphe couvrant. En partant d'un premier sommet $v_1$, on suit une arête, composée de deux demi arêtes indicées, jusqu'à un deuxième sommet $v_2$ puis on suit le propagateur reliant le sommet $v_2$ à un sommet $v_3$. A partir du sommet $v_3$ on suit la demi arête partant du sommet $v_3$ étant de même indice que la demi arête précédant le sommet $v_2$. La lecture du graphe se poursuit de cette façon jusqu'à retomber sur la première arête parcourue, c'est à dire sur l'arête allant du sommet $v_1$ vers le sommet $v_2$. Le graphe couvrant 400 comprend ainsi deux cycles 402 et 404.

La figure 4B illustre un graphe couvrant 406 reliant deux mêmes graphes 408 représentant un invariant d'ordre 6 d'un tenseur d'ordre 5. Ce type de graphe couvrant, entre deux copies de graphes est utilisé pour calculer le moment d'ordre 2 de l'invariant. De manière générale, pour calculer un moment d'ordre $m$, $m \geq 1$, on dénombrera le nombre de cycles, dans un graphe couvrant, entre un nombre $m$ de copies du graphe représentant l'invariant considéré.

Chaque cycle du graphe recouvrant contribue alors à un facteur $n$ à la valeur du moment, où $n$ est la dimension du tenseur. Ainsi, la valeur d'un moment d'ordre $m$, pour un invariant $T$ et représenté par un graphe $G$, est donnée par l'équation :

[Math 1]

$$E[I_G(T)] = \sum_{G'} n^{\#\{nb\ cycles\}},$$

où la somme s'effectue sur l'ensemble des graphes couvrant $G'$ du graphe $G$, et la valeur {nb cycle} correspond au nombre de cycles sur chaque graphe couvrant. Cette relation se vérifie dans le cas Gaussien, mais présente un aspect universel. En effet, cette relation se vérifie aussi pour d'autres distributions de bruits. L'universalité de cette relation est, par exemple, discutée dans « Universality for Random Tensors » publié dans les Annales de l'I.H.P. Probabilités et statistiques par Gurau, R. en 2014.

Dans le cas de tenseurs de dimensions $n_1 \times ... \times n_d$, le calcul des moments se généralise. Dans un exemple, dans ce cas, uniquement les invariants associés à des graphes ayant un unique indice sur chaque arête sont utilisés dans les calculs d'invariants de trace. Dans un autre exemple, une matrice A est construite à partir du tenseur T de départ. A titre d'exemple, pour un tenseur T d'ordre 3, de dimension $n_1 \times n_2 \times n_3$, la matrice A est une matrice carrée de dimension $n_1 \times$

$n_1$ et chaque composante $A_{i,l}$ de cette matrice est égale à la somme $\Sigma_{1 \leq j \leq n2, 1 \leq k \leq n3}$ $T[i][j][k]T[l][k][j]$.

Les tableaux suivants regroupent les valeurs d'espérance, de variance, ainsi que les poids de symétrisation pour les graphes mélonique et « tadpole ». En particulier, la table 1 regroupe les graphes méloniques et la table 2 les graphes « tadpoles ».

[Table 1]

|  | Sous-catégorie 1 | Sous-catégorie 2 | Sous-catégorie 3 |
|---|---|---|---|
| Invariants | $I_1$ | $I_2$, $I_3$, $I_4$ | $I_5 = I_6$ |
| Espérance | $n^3$ | $n^2$ | $n$ |
| Variance | $2n^3$ | $2n^3$ | $n^3 + n$ |
| Poids | 1 | 1 | 2 |

[Table 2]

|  | Sous-catégorie 1 | Sous-catégorie 2 |
|---|---|---|
| Invariants | $I'_1$, $I'_2$, $I'_3$, | $I'_4$, $I'_5$, $I'_6$ |
| Espérance | $n^2$ | $n$ |
| Variance | $2n^3$ | $n^3 + n$ |
| Poids | 1 | 2 |

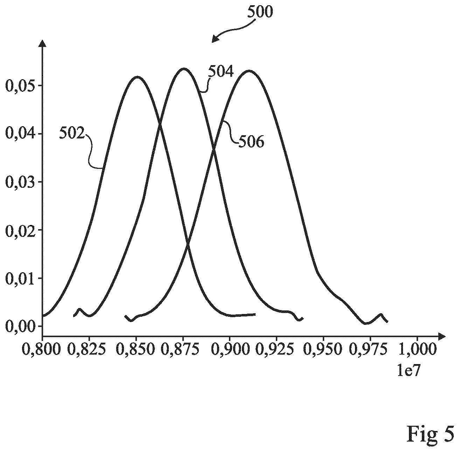

La figure 5 est un graphique 500 illustrant des distributions d'invariants de trace. En particulier, la figure 5 illustre des distributions d'invariants de trace pour des tenseurs comprenant un signal utile, c'est à dire ayant un rapport signal sur bruit strictement supérieur à 0.

Afin de calculer les moments d'un invariant pour des tenseurs ayant un rapport signal sur bruit strictement supérieur à 0, on écrit chaque sommet du graphe associé sous la forme:

[Math 2]

$$T_{i_1, \cdots, i_k} = \sqrt{n}\beta v_{i_1} \cdots v_{i_k} + Z_{i_1, \cdots, i_k},$$

où la partie $v_{i_1} \cdots v_{i_k}$ représente le signal et où Z un tenseur de bruit pur de mêmes dimensions et ordre que le tenseur T. Le calcul de l'espérance de l'un invariant de trace s'effectue selon la même méthode de comptage de cycle telle que décrite en relation avec les figures 4A et 4B. Cependant, lorsque que, dans un cycle, il y a un nombre impair d'éléments du tenseur Z, c'est-à-dire si le nombre de sommets parcourus durant le parcours du cycle est impair, l'espérance et plus généralement chaque moment d'ordre impair est nul pour ce cycle.

Le graphique 500 illustre des distributions d'une valeur d'invariance de trace de type « pillow ».

Une courbe 502 illustre la distribution des valeurs d'invariance de trace de type « pillow » pour un tenseur de bruit pur. Des courbes 504 et 506 illustrent respectivement les distributions de ces mêmes valeurs d'invariance lorsque le rapport signal sur bruit β est égal à 1,6 et 2,6. Les distributions 504 et 506 correspondent alors à la distribution 502 décalée d'une valeur, dépendant du rapport signal sur bruit.

Dans le cas de graphes « tadpoles », tétraédraux ou mélonique, les distributions des valeurs d'invariance de trace ont la même forme, et on observe un décalage selon la valeur du rapport signal sur bruit.

Dans la suite de la description et sauf précision du contraire, un moment, en particulier l'espérance, ou la variance d'un invariant de trace, correspond au moment, en particulier à l'espérance, ou à la variance, de l'invariant pour un tenseur de bruit pur.

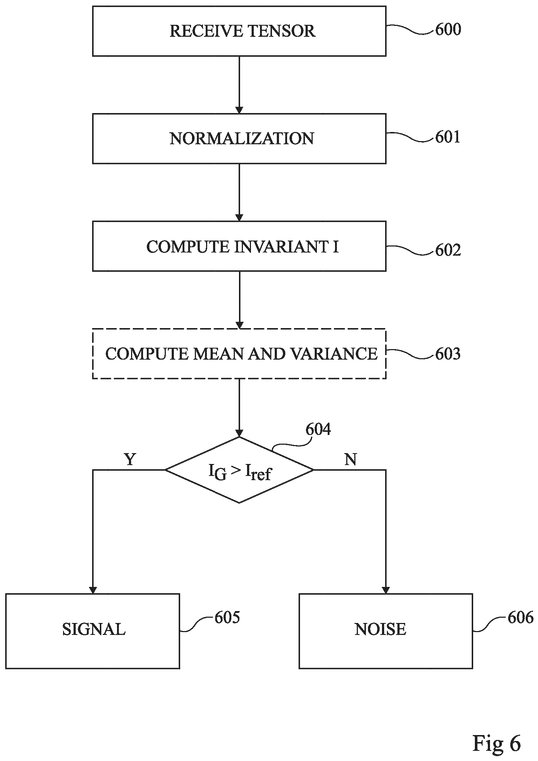

La figure 6 est un organigramme illustrant des étapes d'un procédé de détection de signal, selon un mode de réalisation de la présente description.

Dans une étape 600 (RECEIVE TENSOR), un tenseur est fourni au processeur 108. A titre d'exemple, le tenseur est un objet numérique, obtenu par conversion de données analogiques mesurées par le capteur 102. A titre d'exemple, suite à la réception du tenseur, le processeur 108 est configuré pour le symétriser.

Dans une étape 601 (NORMALISATION) la variance des composantes du tenseur est calculée. Le tenseur est ensuite normalisé sur la base de la variance calculée.

Dans une étape 602 (COMPUTE INVARIANT I), une valeur d'invariance I pour le tenseur symétrisé est calculée par le processeur 108. A titre d'exemple, la valeur d'invariance correspond à un invariant de trace $I_G$, représenté par un graphe $G$. Dans un autre exemple, la valeur d'invariance est une combinaison linéaire de plusieurs invariants de trace $I = \Sigma_j \alpha_j I_{G_j}$, où chaque $I_{G_j}$ est un invariant de trace représenté par un graphe $G_j$. Les graphes $G_j$ appartiennent à une seule ou à plusieurs catégories de graphes. Chaque coefficients $\alpha_j$ est associé au graphe $G_j$ et a, par exemple, été calculé en amont. A titre d'exemple, au moins un des coefficients $\alpha_j$ est égal au poids de symétrisation associé au graphe $G_j$. A titre d'exemple, au moins un des coefficients $\alpha_j$ est égal à l'inverse de la variance de l'invariant $I_j$.

Dans une étape 603 (COMPUTE MEAN AND VARIANCE), l'espérance et la variance de la valeur d'invariance pour un tenseur de bruit pur sont calculées. L'espérance et la variance calculées correspondent à l'espérance $E[I]$ et/ou la variance $Var[I]$ de l'invariant de trace, ou de la combinaison d'invariant de trace considérée dans l'étape 601. Dans le cas où un unique invariant est considéré, l'espérance $E[I]$ est égale à $E[I_G]$ et la variance $Var(I)$ à $Var(I_G)$. Dans le cas où l'invariant soit une combinaison de plusieurs invariants $I = \Sigma_j \alpha_j I_{G_j}$, l'espérance $E[I]$ est égale à $\Sigma_j \alpha_j E[I_{G_j}]$, La variance s'obtient par développement de la variance d'une combinaison linéaire. A titre d'exemple, l'étape 602 est réalisée en amont, par exemple lors de la programmation des instructions 112. Les valeurs de l'espérance $E[I]$ et de variance $Var[I]$ sont alors, par exemple, stockées dans la mémoire non volatile 104. Dans un autre exemple, l'espérance $E[I]$ et la variance $Var[I]$ sont calculées à la volée à chaque exécution des instructions 112.

Dans une étape 604 ($I < I_{ref}$), le processeur 108 est configuré pour, en exécutant les instructions 112, comparer la valeur d'invariance à une valeur de référence. A titre d'exemple, la valeur de référence est égale à la valeur E[I] + $2\sqrt{\mathrm{Var(I)}}$. A titre d'exemple, la valeur de référence est comprise dans la mémoire 104. Dans d'autres exemples, la valeur de référence est une autre valeur, représentant la distribution des valeurs d'invariance pour l'invariant ou la combinaison d'invariants considérés. Dans un autre exemple, la valeur de référence est égale à l'espérance $E[I]$. Encore dans un autre exemple, la valeur de référence est égale à $E[I] + 3\sqrt{Var(I)}$.

Dans le cas où la valeur d'invariance est supérieure, par exemple strictement supérieure, à la valeur de référence (branche Y en sortie du bloc 604) le processeur 108 est configuré pour déterminer, dans une étape 605 (SIGNAL) que le tenseur comprend un signal utile, c'est-à-dire que le rapport signal sur bruit $\beta$ est strictement supérieur à 0. Dans le cas où la valeur d'invariance est inférieure à la valeur de référence (branche N en sortie du bloc 604), le processeur 108 est configuré pour déterminer, dans une étape 606 (NOISE) que le tenseur est un tenseur de bruit pur, c'est-à-dire que le rapport signal sur bruit $\beta$ est égal à 0.

A titre d'exemple, lorsque le processeur 108 détermine que le tenseur est un tenseur de bruit pur, ce dernier est supprimé du dispositif 100. Au contraire, lorsque le processeur 108 détermine que le tenseur comprend un signal utile, le tenseur est par exemple fourni à un circuit de traitement de données. A titre d'exemple, le circuit de traitement de données est configuré pour effectuer des opérations de débruitage sur le tenseur. En particulier, lorsque le tenseur est une représentation d'images, telle qu'une image couleur, ou une vidéo, le circuit de traitement de données est configuré pour effectuer des opérations de traitement d'images.

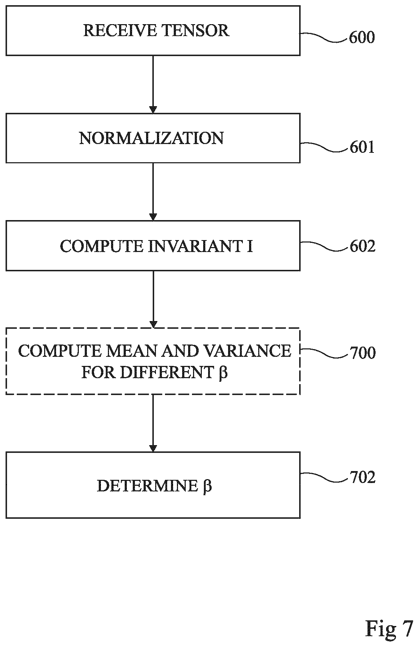

La figure 7 est un organigramme illustrant des étapes d'un autre procédé de détection de signal.

A titre d'exemple, le procédé décrit en relation avec la figure 7 comprend les étapes 600 à 602 décrites en relation avec la figure 6.

Dans une étape 700 (COMPUTE MEAN AND VARIANCE FOR DIFFERENT $\beta$), une valeur d'espérance E$\beta[I]$ et de variance $Var_\beta(I)$ d'une valeur d'invariance d'un tenseur ayant un rapport signal sur bruit $\beta$ sont calculées. A titre d'exemple, l'étape 700 est réalisée pour plusieurs valeurs de $\beta$, $\beta$ pouvant par exemple être nul. Ces valeurs sont par exemple calculées en amont, par exemple lors de la programmation des instructions 112. Dans un autre exemple, ces valeurs sont calculées à la volée, lors de l'exécution, par le processeur 108, des instructions 112.

Dans une étape 702 (DETERMINE $\beta$), le processeur 108 est configuré pour déterminer la valeur du rapport signal sur bruit du tenseur reçu dans l'étape 600. A titre d'exemple, la valeur d'invariance $I$ est comparée aux différentes espérances $E_\beta[I]$ calculées lors de l'étape 700. Le rapport signal sur bruit retenu est la valeur de $\beta$ minimisant la valeur $|I - E_\beta[I]|$. Dans d'autres exemples, la valeur d'invariance $I$ est comparée aux différentes valeurs $E_\beta[I] + 2Var_\beta(I)$. Le rapport signal sur bruit retenu est la valeur de $\beta$ minimisant la valeur $\left| I - E_\beta[I] + 2\sqrt{Var_\beta(I)} \right|$.

A titre d'exemple, lorsqu'il est déterminé que le rapport signal sur bruit est différent de 0, le tenseur est fourni à un circuit de traitement de donnée, par exemple configuré pour effectuer des opérations de traitement d'images, en association de la valeur estimé du rapport signal sur bruit.

Cependant, comme illustré sur la figure 5, les distributions d'un invariant de trace selon différentes valeurs de $\beta$ se chevauchent. Cela induit une incertitude dans le résultat de détection de signal. En effet, lors de la réalisation des procédés décrits en relation avec les figures 6 et 7 sur la base de l'invariant utilisé pour la figure 5, il existe un risque qu'un tenseur comprenant un signal utile soit déterminé comme étant un tenseur de bruit pur, ou inversement.

Selon un mode de réalisation, la valeur d'invariance est calculée sur la base d'une combinaison d'au moins un invariant de trace pour laquelle l'intervalle de chevauchement entre les distributions est réduit.

Pour une valeur d'invariance $I$, une distance entre les distributions associées à un tenseur de bruit pur et à un tenseur comprenant un signal utile avec un rapport signal sur bruit $\beta$ est représentée par une fonction objectif :

[Math 3]

$$f_\beta(I) = \frac{m_S(I, \beta) - m_N(I)}{\sigma_N(I) - \sigma_S(I, \beta)},$$

où $m_S(I, \beta)$ et $\sigma_S(I, \beta)$ sont respectivement l'espérance et l'écart type de la distribution d'un invariant, ou combinaison d'invariant, pour un tenseur ayant un rapport signal sur bruit égal à $\beta$ et où $m_N(I)$ et $\sigma_N(I)$ sont l'espérance et l'écart type de la distribution du même invariant, ou même combinaison d'invariants, pour un tenseur de bruit pur. L'idée est alors de chercher une valeur d'invariance sous la forme d'une combinaison $I = \Sigma_j \alpha_j I_{G_j}$, pour laquelle la quantité $f_\beta(I)$ est assez grande pour éviter des erreurs de détection.

L'espace des paramètres décrivant alors l'invariant $I$ est le t-simplex $\Delta^t$, ou t est le nombre d'invariants $I_{G_j}$ considérés dans la combinaison. Ainsi, en regardant le numérateur de la fonction objectif appliquée à un invariant pondéré, on remarque que pour au moins les invariants de trace d'ordre 2, le numérateur de $f_\beta(\alpha_j I_{G_j})$ est indépendant du type d'invariant choisi et, de par la contribution d'ordre $\sqrt{n}\,\beta$ pour chaque sommet, est de l'ordre de $n\beta^2$. Ainsi en sommant des invariants d'ordre 2, il suffit de prendre en compte la contribution du signal en $n\beta^2$ dans le numérateur et de le multiplier avec la somme des poids $\Sigma_j \alpha_j$ dans le numérateur.

Dans le cas des invariants de degré 4, le numérateur est plus complexe et a pour forme $P_I(n)n\beta^2 + n^2\beta^4$. Pour certains graphes, tels que les graphes tétraédraux, et certains graphes « pillow » la valeur $P_I(n)$ est inférieure à $n\beta^2$ lorsque la dimension $n$ est suffisamment grande. Ainsi la contribution $n^2\beta^4$ se factorise dans le numérateur. En regardant le dénominateur, et plus particulièrement $\sigma_S(I, \beta)$, la plus grande contribution s'approxime par $2\sigma_N(I)$. Ces approximations montrent que pour des invariants d'ordre 2, ou d'ordre 4 remplissant la condition $P_I(n) < n^2\beta^4$, la quantité $\sigma_N(\Sigma_j \alpha_j I_{G_j}) / \Sigma_j \alpha_j$ admet un minimum. De plus, sous la condition que $Cov(I_{G_j}, I_{G_i})$ soit négligeable devant $Var(I_{G_j})$ et $Var(I_{G_i})$, cette quantité est minimale lorsque les poids $\alpha_j$ sont égaux à $\mathcal{N}/Var(I_{G_j})$, où $\mathcal{N}$ est une constante de normalisation telle que $\mathcal{N} \Sigma_j \alpha_j = 1$.

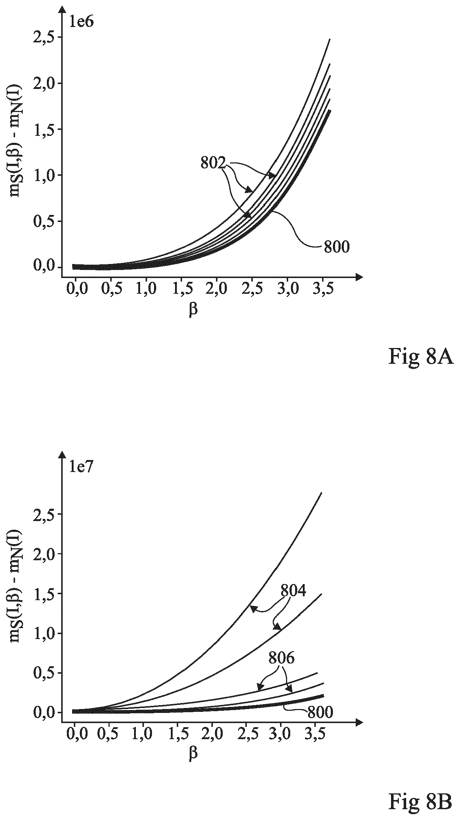

Les figures 8A et 8B sont des graphiques illustrant le comportement de la fonction objectif. En particulier, les figures 8A et 8B illustrent le comportement du numérateur de la fonction objectif pour plusieurs invariants et plusieurs graphes.

Une courbe 800 est la courbe d'équation $n^2\beta^4$ en fonction de $\beta$. La figure 8A illustre plusieurs courbes 802, chacune illustrant le comportement de $m_S(I, \beta) - m_N(I)$, en fonction de $\beta$ et pour plusieurs invariants de type tétraédral. La figure 8B illustre plusieurs courbes 804, et 806 chacune illustrant le comportement de $m_S(I, \beta) - m_N(I)$, en fonction de $\beta$ et pour un invariant de type « pillow ». Les deux figures 8A et 8B montrent toutes les deux un écart entre le comportement des invariants et de $n^2\beta^4$. Cet écart est dû aux termes $P_I$ décrits précédemment. Cependant, dans le cas des graphes tétraédraux, l'écart entre les courbes 802 et la courbe 800 est restreint. L'influence du terme $P_I$ est alors négligeable lorsque la dimension $n$ du tenseur est grande, par exemple lorsque $n \geq 100$. Au contraire, dans le cas des graphes « pillow », l'écart entre les courbes 804 et 800 montre que le terme $P_I$ n'est pas négligeable pour ces invariants. L'écart entre les courbes 806 et 800 est cependant restreint, il existe donc des graphes « pillow » pour lesquels le terme $P_I$ est négligeable.

En particulier, lorsque le terme $P_I$ est négligeable lorsque $n$ est grand, la fonction objectif est telle que

[Math 4]

$$f_\beta(I) = \frac{m_S(I, \beta) - m_N(I)}{\sigma_N(I) - \sigma_S(I, \beta)} \sim \frac{(n\beta^2)^{s/2} \sum_j \alpha_j}{2\sigma_N(I)},$$

où s correspond à l'ordre des invariants. Dans le cas où la valeur d'invariance est calculée à partir d'invariants d'ordres différents, la valeur de $s$ est une approximation. A titre d'exemple, la valeur de $s$ correspond à la moyenne des ordres des invariant de trace utilisés. La minimisation de la fonction objectif consiste à chercher une combinaison de valeurs pour chaque $\alpha_i$, sous la condition que $\Sigma \alpha_i = 1$ et de sorte que, pour cette combinaison de coefficients, la valeur de la fonction objectif soit la plus faible possible.

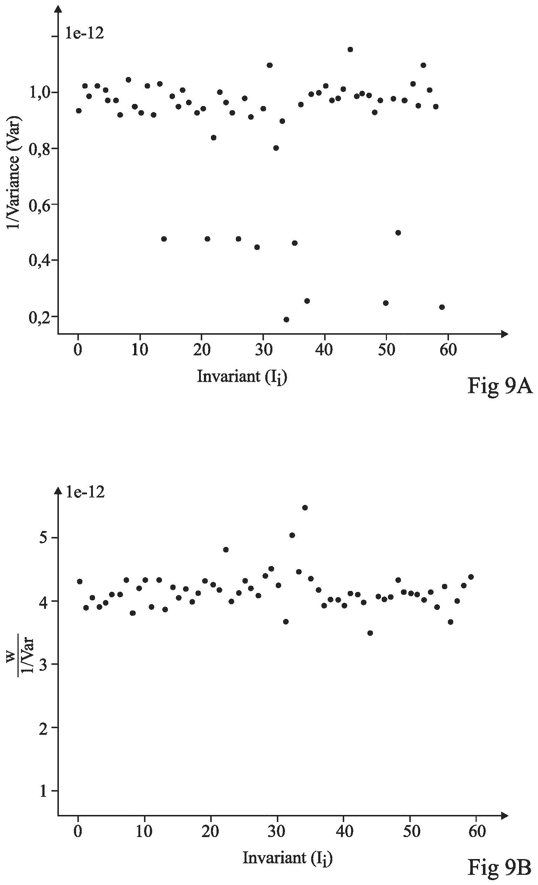

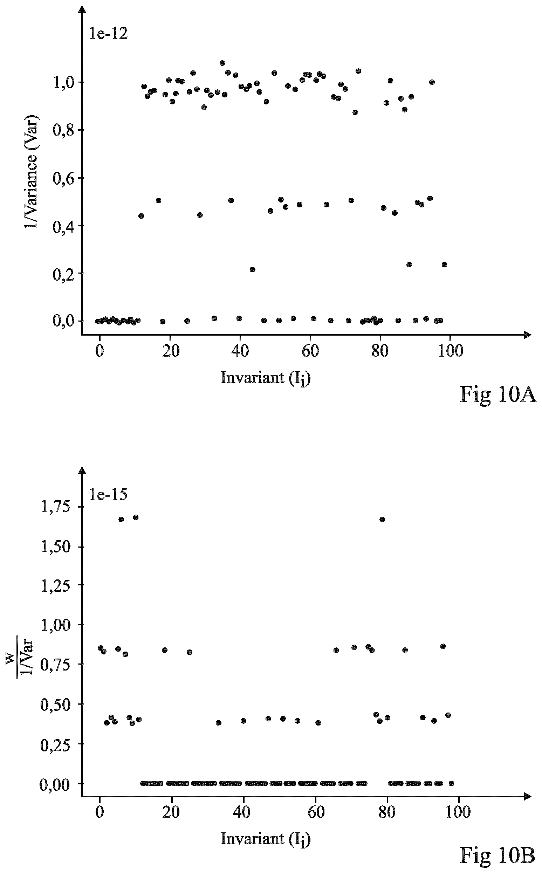

Les figures 9A, 9B, 10A et 10B sont des graphiques illustrant la distribution de poids fournis par un processus de symétrisation.

En particulier, les figures 9A et 9B illustrent des poids pour les 60 graphes tétraédraux $G_i$ différents. Les figures 10A et 10B illustrent des poids pour les 99 graphes « pillow » $G_i$ différents

Les figures 9A et 10A sont des graphiques comprenant respectivement 60 et 99 points. Chaque point a pour abscisse l'indice i du graphe considéré et pour ordonnée la valeur de $1/Var(I_{G_i})$ associée.

Les figures 9B et 10B sont des graphiques comprenant respectivement 60 et 99 points. Chaque point a pour abscisse (Invariant($I_j$)) l'indice i du graphe considéré et pour ordonnée la valeur de $w_i/Var(I_{G_i})$ associée, où $w_i$ est le poids de symétrisation de l'invariant $I_j$.

Les figures 9A et 9B montrent que, dans le cas des graphes tétraédraux, les poids $w_i$ produits par la symétrisation et les valeurs $1/Var(I_{G_i})$ sont proportionnels. Ainsi dans ce cas, la symétrisation est équivalente à la pondération des graphes par l'inverse de la variance. Au contraire, les figures 10A et 10B montrent que, dans le cas des graphes « pillow », les poids de symétrisation $w_i$ et les valeur $1/Var(I_{G_i})$ ne sont pas proportionnels.

Les valeurs des poids utilisées pour les figures 9B et 10B sont, par exemple, obtenues à l'aide de méthodes numériques permettant de compter le nombre de répétitions dans les 216, ou 348, invariants possibles pour les graphes tétraédraux, ou « pillow ». Pour chaque invariant, la variance est, par exemple, obtenue numériquement, par exemple, à partir d'un grand nombre d'échantillons, par exemple entre 500 et 2000, de tenseurs de bruit pur. A titre d'exemple, le calcul numérique de la variance est réalisé en amont du procédé de détection de signal tel que décrit en relation avec les figures 6 et/ou 7. A titre d'exemple le calcul numérique de la variance est réalisé sur un ordinateur, avant la programmation des instructions 112.

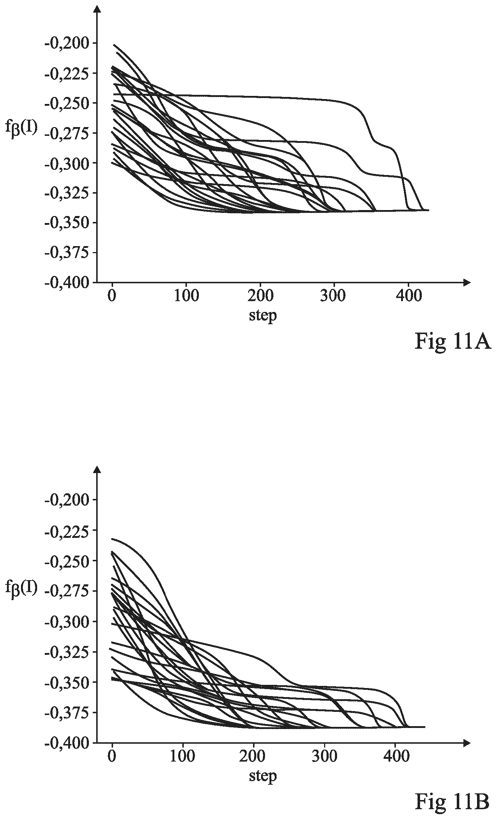

Les figures 11A et 11B sont des graphiques illustrant des descentes de gradient associées à la fonction objectif $f_\beta(I)$. En particulier, les figures 11A et 11B illustrent des descentes de gradient respectivement réalisées sur le sous-simplex des graphes méloniques ou le sous-simplex de graphes « tadpoles », à partir de 30 différentes initialisations des coefficient $\alpha_j$. La descente de gradient permet d'optimiser les valeurs des coefficients, c'est à dire trouver une combinaison minimisant la valeur de la fonction objectif, pour un ensemble fixe de graphes. Dans la suite de la description, le terme minimiser la fonction objectif signifie sélectionner la combinaison de valeurs des coefficients pour laquelle, pour toutes les autres combinaisons testées numériquement, la valeur de la fonction objectif est supérieure à celle associée à la combinaison minimisante. Dans certains cas, au moins un coefficient est déterminé comme étant nul. Les figures 11A et 11B illustrent l'évolution des valeurs $f_\beta(I)$, pour chaque initialisation, suite à plusieurs étapes (step) de descente de gradient. Quelle que soit l'initialisation, les figures 11A et 11B montrent qu'il existe une combinaison d'invariants pour laquelle la valeur de la fonction $f_\beta(I)$ est minimale. Les combinaisons d'invariants issues du processus de descente de gradient permettent donc d'avoir une distribution associée à un bruit pur la plus éloignée possible des distributions associées à un rapport signal sur bruit non nul.

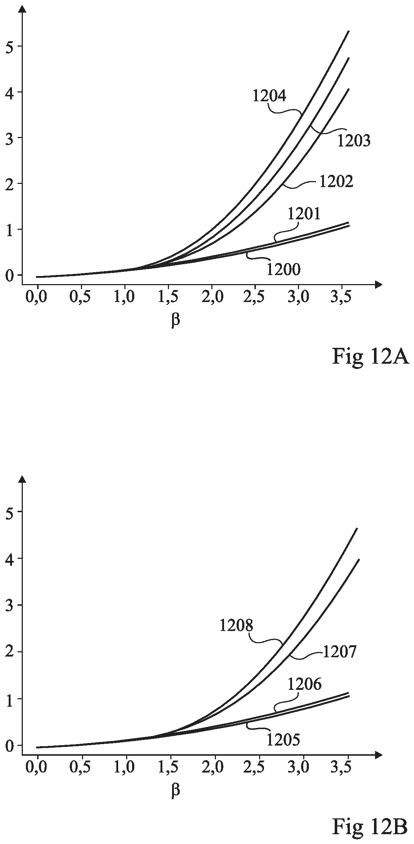

Les figures 12A et 12 B sont des graphiques illustrant les valeurs de la fonction objectif pour différents graphes et en fonction de la valeur du rapport signal sur bruit.

En particulier, la figure 12A illustre des courbes 1200, 1201, 1202 et 1203 représentants respectivement la valeur $f_\beta(I)$ en fonction de β, pour un invariant $I$ étant une combinaison d'invariants de trace « tadpole », mélonique, « pillow » et tétraédraux. La courbe 1204 représente la valeur $f_\beta(I)$ en fonction de β, pour un invariant $I$ étant une combinaison d'invariants de trace appartenant à plusieurs catégories. En particulier, les combinaisons d'invariants considérées sont obtenues suite à la réalisation d'une descente de gradient, afin de déterminer des valeurs de coefficients pour lesquels la valeur de la fonction objectif est minimale.

La figure 12B illustrent des courbes 1205, 1206, 1207 et 1208, similaires aux courbes 1200, 1201, 1202 et 1203 à l'exception que les coefficients des invariants sont égaux à l'inverse de la variance de l'invariant associé. Comme décrit en relation avec les figures 8A, 8B, 9A, 9B et 10A, 10B, l'inverse de la variance d'un invariant tétraédral est proportionnel au poids du graphe.

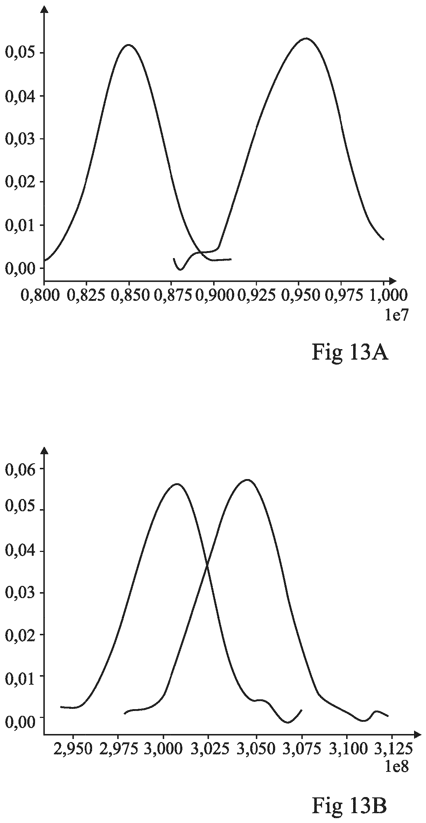

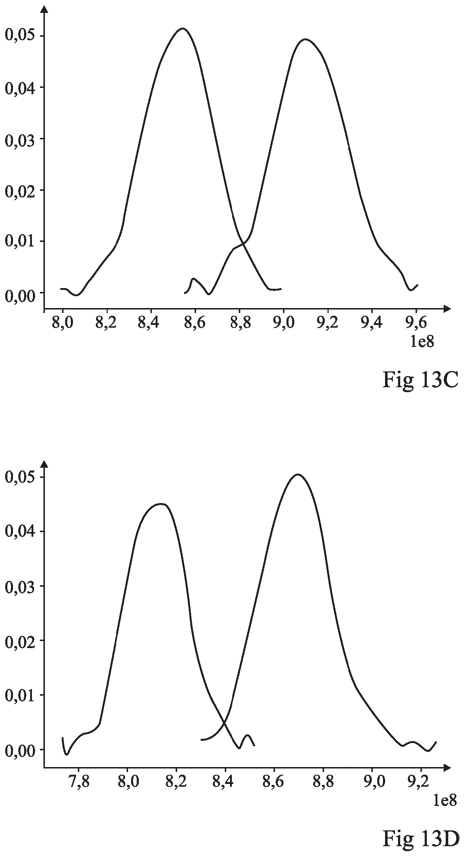

Les figures 13A, 13B, 13C et 13D sont des graphiques illustrant des distributions d'invariants de trace. En particulier, sur chaque figure 13A à 13D, la distribution de gauche est une distribution d'une valeur d'invariance pour un tenseur de bruit pur et la distribution de droite est associée à un tenseur comprenant un signal utile ayant un rapport signal sur bruit égal à 3. De plus, la dimension des tenseurs utilisés pour l'élaboration des graphiques est égale à 100.

Les distributions illustrées par la figure 13A sont celles associées à une combinaison d'invariants de trace uniquement de type « pillow », chaque invariant étant pondéré par l'inverse de sa variance. Les distributions illustrées par la figure 13B sont celles associées à la même combinaison d'invariants mais pondérée les poids de symétrisation associés. L'intervalle de chevauchement entre les deux distributions est moindre lorsque les invariants sont pondérés par l'inverse de la variance. En effet, dans le cas des invariants de type « pillow », comme décrit en relation avec la figure 10B, l'inverse de la variance n'est pas équivalent au poids de symétrisation.

Les distributions illustrées par la figure 13C sont celles associées à une combinaison d'invariants de trace uniquement tétraédraux, chaque invariant étant pondéré par l'inverse de sa variance ou par le poids de symétrisation associé.

Les distributions illustrées par la figure 13D sont celles associées à une combinaison d'invariants de trace méloniques, « pillow », « tadpole » et tétraédraux, chaque invariant étant pondéré par une valeur déterminée suite à la réalisation d'une descente de gradient. A titre d'exemple, les invariants de type « pillow » sont pondérés par l'inverse de leur variance et les invariants de type tétraédraux, "tadpole », ou mélonique, sont pondérés par le poids de symétrisation associé.

L'intervalle de chevauchement est moindre lorsque la valeur d'invariance est calculée à partir d'une combinaison d'invariants de tous types.

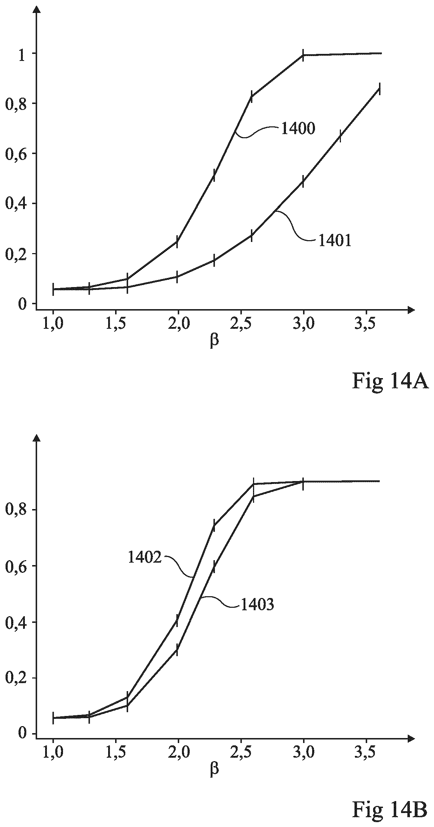

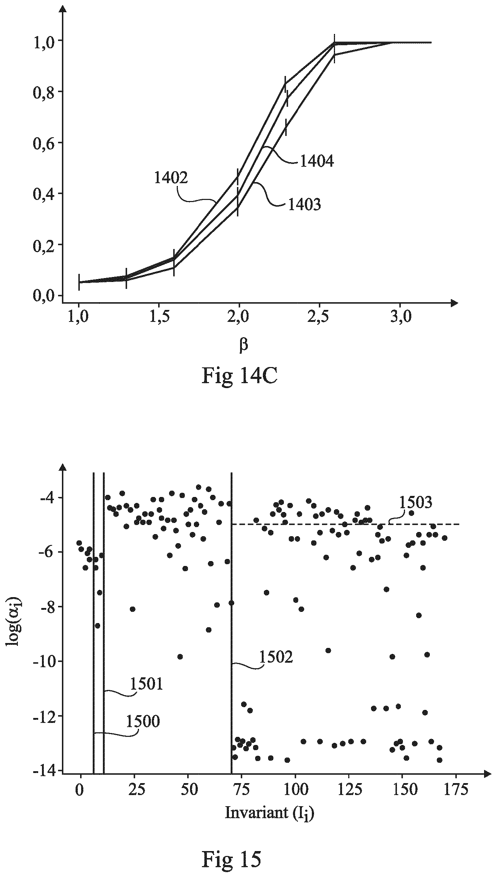

Les figures 14A, 14B et 14C sont des graphiques illustrant des taux de succès dans la détection de signal, selon un mode de réalisation de la présente description.

La figure 14A illustre des taux de succès dans l'application du procédé de détection de signal tel que décrit en relation avec la figure 6 lorsque la valeur d'invariance est une combinaison d'invariants de type « pillow ». En particulier, une courbe 1400 illustre le taux de succès lorsque la combinaison d'invariant de type « pillow » est pondéré par l'inverse de la variance. Une courbe 1401 illustre le taux de succès lorsque la combinaison d'invariant de type « pillow » est pondéré par les poids de symétrisation. A titre d'exemple, les poids et invariants utilisés sont les mêmes que ceux utilisés pour l'obtention des distributions illustrées en figure 13A et 13B. Le taux de succès est donc meilleur lorsque la pondération est réalisée par les inverses de variance, comme le laissait supposer les figures 13A et 13B.

La figure 14B illustre des taux de succès dans l'application du procédé de détection de signal tel que décrit en relation avec la figure 6. En particulier, une courbe 1402 illustre le taux de succès pour une combinaison d'invariants de tous types et une courbe 1403 illustre le taux de succès pour une combinaison comprenant uniquement des invariants de type tétraédraux. A titre d'exemple, les poids et invariants utilisés sont les mêmes que ceux utilisés pour l'obtention des distributions illustrées en figures 13C et 13D. Le taux de succès est donc meilleur lorsque la valeur d'invariance est calculée à partir de plusieurs types d'invariants de trace comme le laissait supposer les figures 13C et 13D.

La figure 14C regroupe les courbe 1402 et 1403 avec une courbe 1404 illustrant les taux de succès pour une valeur d'invariance étant une combinaison de 28 invariants de type « pillow », dont 3 sont pondérées par le poids de symétrisation associé et les 25 autres par l'inverse de leur variance.

A titre d'exemple, les taux de succès ont été calculée à partir d'un grand nombre d'échantillons, par exemple entre 500 et 2000, de tenseurs dont le rapport signal sur bruit est connu. Le procédé décrit en relation avec la figure 6 est par exemple réalisé sur chaque échantillon. Le résultat fourni par le processeur 108 est alors comparé avec la réalité. On observe que plus le rapport signal sur bruit est élevé, plus le taux de succès est haut. En particulier, le taux de succès est égal à 1 lorsque que rapport signal sur bruit est supérieur à 3.

La figure 15 est un graphique illustrant des poids obtenus par descente de gradients. En particulier, la figure 15 illustre 4 catégories d'invariants, chaque catégorie étant séparée par les lignes verticales 1500, 1501 et 1502. A droite de la ligne 1502, des points associés à des invariants de trace de type « pillow » ont pour ordonnée ($log(\alpha_i)$) le logarithme de la valeur de pondération obtenue par réalisation d'un procédé de descente de gradient. Une ligne horizontale 1503 sépare en deux parties les invariants de type « pillow ». Au-dessus de la ligne 1503 se trouvent des invariants permettant d'obtenir un taux de succès satisfaisant, par exemple les taux de succès illustrés par la courbe 1404. Sous la ligne 1503 se trouvent des invariants ne donnant pas de résultats satisfaisants. A gauche de la ligne 1500 des points associés à des invariants de trace mélonique sont illustrés. Entre les lignes 1500 et 1501 des points associés à des invariants de trace « tadpole » sont illustrés. Entre les ligne 1501 et 1502, des points associés à des invariants de trace tétraédraux sont illustrés.

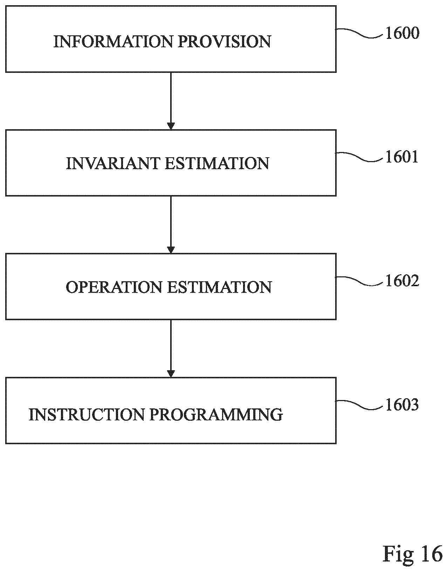

La figure 16 est un organigramme illustrant un procédé de sélection d'un ensemble d'invariants de trace, selon un mode de réalisation de la présente description.

A titre d'exemple, le procédé décrit en relation avec la figure 16 est réalisé par un dispositif externe au dispositif 100 tel qu'un ordinateur. A titre d'exemple, le dispositif externe comprend une moire non volatile dans laquelle sont stockées des indications de ressources, telles que des ressources en mémoire et/ou en temps, nécessaires pour le calcul d'invariants de trace et/ou de combinaison d'invariants de traces. A titre d'exemple la mémoire stocke une liste indexant une pluralité de combinaisons d'invariants associés à des poids déterminés par exemple par une méthode de descente de gradient. Dans un autre exemple, pour chaque invariant d'une combinaison, le poids associé est le poids de symétrisation, ou l'inverse de la variance. A titre d'exemple, en association de chaque combinaison, la mémoire stocke une indication d'un nombre d'opérations permettant le calcul de la valeur d'invariance associée. A titre d'exemple, en association de chaque combinaison, la mémoire stocke en outre une indication de ressources nécessaires et/ou de temps nécessaire au calcul de la valeur d'invariance associée. A titre d'exemple, l'indication de temps est de la forme « petit », « moyen » ou « grand » associée à, par exemple, une plage de capacité mémoire.

Dans une étape 1600 (INFORMATION PROVISION) des informations à propos du dispositif 100 sont fournies au dispositif externe. Les informations comprennent par exemple la ressource mémoire du dispositif 100. A titre d'exemple, la ressource mémoire correspond à la capacité de la mémoire volatile 106. Les informations comprennent par exemple en outre la performance du processeur 108. Les informations comprennent, par exemple en outre l'ordre des tenseurs acquis par le capteur 102 ainsi que les dimensions des tenseurs. A titre d'exemple, les informations comprennent en outre une indication de temps, par exemple de la forme « petit », « moyen » ou « grand », dans lequel le calcul de la valeur d'invariance, ou le procédé de détection de signal tel que décrit en relation avec la figure 6, est à effectuer. Dans un exemple, uniquement la capacité de la mémoire 106 ainsi qu'un nombre d'opérations sont fournies au dispositif externe.

Le nombre d'opérations correspond par exemple à un nombre maximum d'opérations pour le calcul de l'invariant de trace afin de satisfaire, par exemple, une contrainte de temps de calcul.

Dans une étape 1601 (INVARIANT ESTIMATION), le dispositif externe estime une combinaison d'invariants adaptée au dispositif 100. A titre d'exemple, l'estimation s'effectue par lecture de la liste stockée dans la mémoire non volatile. La combinaison d'invariants retenue est par exemple celle correspondant le maximum aux informations fournies lors de l'étape 1600. Dans un autre exemple, certains critères, tels que la ressource mémoire, sont priorisés.

Dans une étape 1602 (OPERATION ESTIMATION) un nombre d'opérations nécessaires pour le calcul de chacun des invariant de trace compris dans la combinaison est estimé. Dans un autre exemple, un nombre d'opérations nécessaires pour le calcul de la valeur d'invariance, associée à la combinaison, est estimé lors de l'étape 1602. A titre d'exemple, le nombre d'opérations est estimé sur la base des dimensions et de l'ordre du tenseur.

Dans une étape 1603 (INSTRUCTION PROGRAMMING) le dispositif 100 est par exemple programmé afin de mettre en oeuvre le procédé décrit en relation avec la figure 6 à partir du calcul de valeurs d'invariance sur la base de la combinaison estimée lors de l'étape 1601. A titre d'exemple, l'étape 1603 comprend la programmation des instructions 1603 afin que lors de leur exécution la valeur d'invariance, sur la base de la combinaison estimée dans l'étape 1601, soit calculé. A titre d'exemple, l'étape 1603 comprend en outre le calcul de la valeur de référence $I_{ref}$ et la programmation d'une instruction, dans les instructions 112, commandant la comparaison de la valeur d'invariance avec la valeur de référence. L'étape 1603 comprend en outre, le stockage des instructions 112 ainsi programmées dans le dispositif 100.

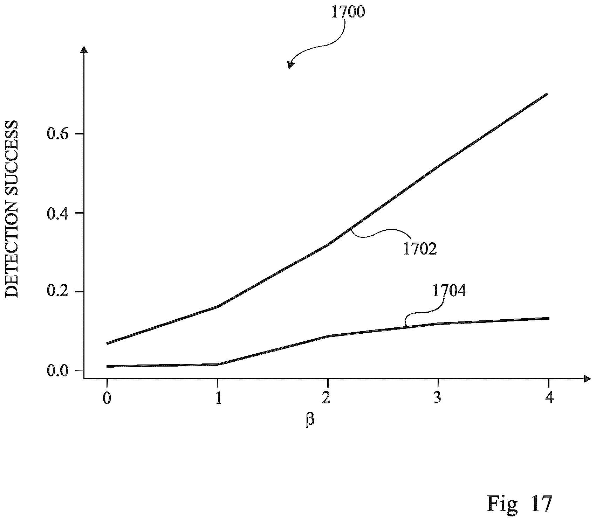

La figure 17 est un graphique 1700 illustrant des taux de succès dans la détection de signal. En particulier, des courbes 1702 et 1704 illustrent des taux de succès, sur une échelle allant de 0 à 1, et en fonction de la valeur du rapport signal sur bruit β.

La courbe 1702 illustre les taux de succès (DETECTION SUCCESS) pour la réalisation d'un procédé de détection du signal tel que décrit en relation avec la figure 6 et sur la base d'une valeur d'invariance comprenant uniquement des invariants de type tétraédraux. La courbe 1704 illustre les taux de succès suite à la mise en oeuvre d'une méthode matricielle de détection de signal basée sur la conversion des tenseurs en matrices. A titre d'exemple, les courbes 1702 et 1704 sont obtenues par traitement des mêmes valeurs de tenseurs. En particulier, les tenseurs utilisés sont d'ordre 3 et de dimension 200x200x200 et les taux de succès sont calculés à partir de 1000 échantillons. En particulier, la méthode matricielle mise en oeuvre est décrite dans la publication « Détection of signal in spiked rectangular models. » publiée en 2021 dans « International Conférence on Machine Learning » par Jung, Ji Hyung, Hye Won Chung and Ji Oon Lee. Quel que soit la valeur du rapport signal sur bruit, le procédé décrit en relation avec la figure 6 obtient un taux de succès supérieur à la méthode matricielle.

Un avantage des modes de réalisation décrit est qu'ils permettent la mise en oeuvre d'un procédé de détection de signal sur des données représentées par des tenseurs d'ordres supérieurs ou égal à 3, sans les convertir en matrices.

Un autre avantage des modes de réalisation décrits est qu'ils permettent d'adapter le calcul de la valeur d'invariance de sorte à minimiser le taux d'échec dans le procédé de détection.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. L'estimation d'une combinaison d'invariants permettant le calcul de la valeur d'invariance peut s'effectuer sur d'autres critères que des critères de ressource mémoire et/ou temps.

Enfin, la mise en oeuvre pratique des modes de réalisation et variantes décrits est à la portée de la personne du métier à partir des indications fonctionnelles données ci-dessus.


**Revendications**

**1.** Procédé de détection d'un signal utile, le procédé comprenant :

> - l'acquisition d'un signal brut, par un capteur (102) ;
> - la fourniture du signal brut, à un dispositif de traitement (108), le signal brut étant représenté par un tenseur d'ordre d supérieur ou égal à 3 ;
> - le calcul, par le dispositif de traitement, d'une valeur d'invariance (*I*) associée au tenseur, la valeur d'invariance étant calculée sur la base d'au moins un invariant de trace sous le groupe orthogonal de degré d ($O(n)^d$) pour les tenseurs d'ordre *d* ;
> - la comparaison, par le dispositif de traitement (108), de la valeur d'invariance associée au tenseur avec une première valeur de référence ($I_{ref}$) ;
> - sur la base de la comparaison, la mise à disposition, par le dispositif de traitement, d'une estimation du rapport signal sur bruit ($\beta$) du signal brut ; et
> - si le rapport signal sur bruit estimé est différent de 0, la fourniture du tenseur à un circuit configuré pour traiter le signal brut.

**2.** Procédé selon la revendication 1, dans lequel le capteur (102) est configuré pour acquérir des représentations d'images et le circuit configuré pour traiter le signal brut est un circuit de traitement d'image.

**3.** Procédé selon la revendication 1 ou 2, dans lequel la valeur d'invariance associée au tenseur est une combinaison linéaire d'une pluralité d'invariants de trace $I_j$ pour le groupe orthogonal ($O(n)$) pour les tenseurs d'ordre $d$, la combinaison étant de la forme $\Sigma_j \alpha_j I_j$, où les valeurs $\alpha_j$ sont des coefficients de pondération.

**4.** Procédé selon la revendication 3, dans lequel la combinaison linéaire comprend des invariants de trace mélonique et/ou de type « tadpole » et/ou tétraédraux et/ou de type « pillow ».

**5.** Procédé selon la revendication 4, dans lequel le coefficient de pondération d'un invariant de trace de type « pillow » est égal à l'inverse de la variance de l'invariant pour un tenseur de bruit pur.

**6.** Procédé selon la revendication 4 ou 5, dans lequel le coefficient de pondération d'un invariant de trace mélonique et/ou de type « tadpole » et/ou tétraédral est égal au poids de symétrisation de l'invariant.

**7.** Procédé selon l'une quelconque des revendications 1 à 6, dans lequel la première valeur de référence est fonction de l'espérance de la valeur d'invariance pour un tenseur de bruit pur.

**8.** Procédé selon la revendication 7, dans lequel la première valeur de référence est égale à $E[I] + 2\sqrt{Var(I)}$, où $E[I]$ et $Var(I)$ sont respectivement l'espérance et la variance de la valeur d'invariance pour un tenseur de bruit pur.

**9.** Procédé selon l'une quelconque des revendications 1 à 8, dans lequel, si la valeur d'invariance est supérieure à la première valeur de référence, le dispositif de traitement (108) est configuré pour estimer que la valeur du rapport signal sur bruit ($\beta$) du signal brut est strictement supérieure à 0.

**10.** Procédé selon l'une quelconque des revendications 1 à 9, comprenant en outre, lorsqu'il est déterminé que la valeur d'invariance est supérieure à la première valeur de référence :

- la comparaison de la valeur d'invariance avec une deuxième valeur de référence fonction de l'espérance de la valeur d'invariance pour un tenseur associé à un rapport signal sur bruit de valeur β.

**11.** Dispositif (100) comprenant :

- un capteur configuré pour acquérir un signal brut ;
- un dispositif de traitement configuré pour exécuter des instructions (112) stockées dans une mémoire non volatile (104) du dispositif, l'exécution des instructions permettant de détecter si le signal brut comprend un signal utile, en faisant :
- la mise en forme du signal brut sous la forme d'un tenseur d'ordre supérieur à 3 ;
- le calcul d'une valeur d'invariance du tenseur ;
- la comparaison de la valeur d'invariance avec une valeur de référence ;
- sur la base de la comparaison, l'estimation du rapport signal sur bruit présent dans le signal brut ; et
- s'il est déterminé que le rapport signal sur bruit est non nul, la fourniture du tenseur à un circuit configuré pour effectuer des opérations de traitement du signal brut.

**12.** Dispositif selon la revendication 11, dans lequel le capteur est configuré pour acquérir des représentations d'image et dans lequel le circuit configuré pour effectuer des opérations de traitement du signal brut est un circuit de traitement d'image.

**13.** Procédé selon l'une quelconque des revendications 1 à 10 comprenant la détermination d'une combinaison d'invariants de trace, la combinaison étant de la forme $\Sigma_j \alpha_j I_j$, où les $I_j$ sont des invariants de trace et les valeurs $\alpha_j$ sont des coefficients de pondération, adapté au dispositif (100), la détermination de la combinaison comprenant :

- la fourniture de l'indication des ressources en mémoire du dispositif à un dispositif externe ;
- la fourniture de l'indication d'un temps de traitement, au dispositif externe ;
- la fourniture d'une indication de dimensions de l'ordre de tenseurs au dispositif externe ;
- la recherche d'un ensemble d'invariants de trace, en association d'un ensemble de poids, formant la combinaison, parmi une pluralité d'invariants de trace, chaque ensemble d'invariants de trace étant associé à un coût et chaque valeur de coût étant stockée dans une mémoire du dispositif externe en association d'un identifiant de l'ensemble associé, la recherche de l'ensemble d'invariants s'effectuant sur la base des ressources mémoire et/ou du temps de calcul et/ou de l'indication des dimensions fournies ;

- la fourniture de l'ensemble d'invariants de trace et des poids au dispositif afin que la valeur d'invariance soit calculée, par le dispositif, sur la base de la combinaison d'invariants déterminée.

14. Procédé selon la revendication 13, dans lequel les poids, associés à chaque invariant de trace dans chaque combinaison, sont déterminés par la réalisation d'une descente de gradient sur une fonction objectif déterminant une distance entre la distribution de la valeur d'invariance associé à la combinaison pour un tenseur de bruit pur et pour un tenseur ayant un rapport signal sur bruit non nul.

15. Procédé selon la revendication 13 ou 14, dans lequel chaque invariant de trace est un invariant de trace mélonique et/ou de type « tadpole » et/ou tétraédral et/ou de type « pillow ».

DEVICE

CPU

RAM

108

106

104

110

SENSOR

102

NV MEM 112

INSTRUCTIONS

100

Fig 1

Fig 2

Fig 3A

Fig 3B

Fig 4A

Fig 4B

Fig 5

Fig 6

RECEIVE TENSOR — 600

NORMALIZATION — 601

COMPUTE INVARIANT I — 602

COMPUTE MEAN AND VARIANCE
FOR DIFFERENT β — 700

DETERMINE β — 702

Fig 7

Fig 8A

Fig 8B

Fig 9A

Fig 9B

Fig 10A

Fig 10B

Fig 11A

Fig 11B

Fig 12A

Fig 12B

Fig 13A

Fig 13B

Fig 13C

Fig 13D

Fig 14A

Fig 14B

Fig 14C

Fig 15

```
┌─────────────────────────────────┐
│                                 │
│      INFORMATION PROVISION      │────⌒ 1600
│                                 │
└─────────────────────────────────┘
                 │
                 ▼
┌─────────────────────────────────┐
│                                 │
│       INVARIANT ESTIMATION      │────⌒ 1601
│                                 │
└─────────────────────────────────┘
                 │
                 ▼
┌─────────────────────────────────┐
│                                 │
│      OPERATION ESTIMATION       │────⌒ 1602
│                                 │
└─────────────────────────────────┘
                 │
                 ▼
┌─────────────────────────────────┐
│                                 │
│    INSTRUCTION PROGRAMMING      │────⌒ 1603
│                                 │
└─────────────────────────────────┘
```

Fig 16

Fig 17

| Europäisches Patentamt European Patent Office Office européen des brevets | **RAPPORT DE RECHERCHE EUROPEENNE** | **Numéro de la demande**<br>EP 24 22 3062 |
| --- | --- | --- |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
| --- | --- | --- | --- |
| A | KAI KRAJSEK ET AL: "Riemannian Bayesian estimation of diffusion tensor images", COMPUTER VISION, 2009 IEEE 12TH INTERNATIONAL CONFERENCE ON, IEEE, PISCATAWAY, NJ, USA, 29 septembre 2009 (2009-09-29), pages 2327-2334, XP031672761, ISBN: 978-1-4244-4420-5 * abrégé * * sections "1. Introduction", "2.2. Noise in NMR images" * ----- | 1-15 | INV.<br>G06T5/70 |
| A | US 2016/231410 A1 (WARFIELD SIMON K [US] ET AL) 11 août 2016 (2016-08-11) * abrégé * * alinéas [0004], [0083] * ----- | 1-15 | |

| | | | DOMAINES TECHNIQUES RECHERCHES (IPC) |
| --- | --- | --- | --- |
| | | | G06T |

Le présent rapport a été établi pour toutes les revendications

| Lieu de la recherche | Date d'achèvement de la recherche | Examinateur |
| --- | --- | --- |
| Munich | 22 avril 2025 | Eckert, Lars |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 22 3062

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-04-2025

| Document brevet cité au rapport de recherche | Date de publication | Membre(s) de la famille de brevet(s) | Date de publication |
|---|---|---|---|
| US 2016231410 A1 | 11-08-2016 | US 2016231410 A1 | 11-08-2016 |
| | | WO 2015042416 A1 | 26-03-2015 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **GURAU, R.** Universality for Random Tensors. *Annales de l'I.H.P. Probabilités et statistiques*, 2014

- **JUNG, JI HYUNG** ; **HYE WON CHUNG** ; **JI OON LEE**. Détection of signal in spiked rectangular models.. *International Conférence on Machine Learning*, 2021